# FASCICULE DE BREVET EUROPEEN

(11) **EP 0 803 753 B1**
(45) Date de publication et mention de la délivrance du brevet: **21.04.2004**
(21) Numéro de dépôt: 97400891.4
(22) Date de dépôt: 21.04.1997
(51) Int. Cl.: G02B 6/44, G02B 6/38

(54) **Dispositif d'aide pour l'intervention et le rangement des fibres d'un câble optique**
Hilfsvorrichtung zum Eingriff und zum Sortieren von Fasern in einem optischen Kabel
Auxiliary device for intervening and sorting fibres in an optical cable

(30) Priorité: 25.04.1996 FR 9605256
(43) Date de publication de la demande: 29.10.1997
(73) Titulaire: FRANCE TELECOM, 75015 Paris (FR)
(72) Inventeur: Caudrelier, Jacques, 45190 Villorceau (FR)
(74) Mandataire: Peaucelle, Chantal

(56) Documents cités:
- DE-A- 2 807 806
- GB-A- 2 151 041
- PATENT ABSTRACTS OF JAPAN vol. 003, no. 064 (E-114), 31 Mai 1979 & JP 54 041752 A (SUMITOMO ELECTRIC IND LTD), 3 Avril 1979,

## Description

La présente invention est relative à un dispositif propre à permettre la préparation de câbles à fibres optiques, notamment pour faciliter le raccordement d'une ou plusieurs des fibres de l'un de ces câbles avec celles d'un autre câble similaire, à l'intérieur d'une boite à épissures appropriée.

On sait que les câbles de ce genre se présentent habituellement sous la forme d'une enveloppe de protection, généralement en matière plastique du genre polyéthylène, à l'intérieur de laquelle est disposée une pluralité de fibres optiques individuelles, comprenant chacune un coeur ou partie interne en silice qui assure la transmission des signaux optiques, et une gaine ou enrobage externe, également en matière plastique, celle-ci comportant avantageusement dans sa surface un revêtement coloré permettant de distinguer chaque fibre de ses voisines lorsqu'elles sont extraites de l'enveloppe de protection, à l'extrémité du câble notamment.

Du fait de leur structure, ces fibres optiques présentent une souplesse relativement importante, impliquant pour chacune d'elles un effet de ressort, de telle sorte que, une fois le câble dénudé, c'est-à-dire son enveloppe de protection retirée, les fibres individuelles ont tendance à foisonner et à se disperser, ou encore à s'emmêler entre elles, notamment lorsque le dénudage du câble est intervenu sur une grande longueur, ce qui est couramment nécessaire pour pouvoir travailler convenablement sur chaque fibre séparément, en particulier pour réaliser sur une ou plusieurs de celles-ci un piquage de raccordement ou une liaison en bout avec une autre fibre, au moyen d'une épissure adéquate.

Pour éviter que les fibres ainsi extraites de l'enveloppe de protection du câble après dénudage de celui-ci ne soient donc emmêlées, voire cassées ou brisées si elles traînent sur le sol, il est classique de disposer ces fibres dans des cassettes de rangement où elles sont enroulées sur elles-mêmes, éventuellement raccordées deux à deux bout à bout par une épissure de liaison, chaque fibre pouvant être extraite de la cassette correspondante pour fournir une surlongueur suffisante afin de réaliser cette liaison ou un piquage avec raccordement d'une fibre donnée sur la partie courante d'une autre.

L'invention concerne un dispositif destiné à permettre une mise en place sûre et facile des fibres dans une telle cassette d'où une quelconque de ces fibres peut ensuite être aisément extraite pour une intervention quelconque, en particulier pour réaliser un piquage ou un raccordement avec une autre fibre sans risques de rupture ou de torsion dangereuse sur ces fibres.

A cet effet, le dispositif considéré se caractérise en ce qu'il comporte un support d'appui comprenant une table munie de deux bras pivotants opposés, articulés sur la table de manière à pouvoir se disposer, soit dans le prolongement l'un de l'autre, soit sensiblement parallèles l'un à l'autre au-dessus d'un plan de travail, de préférence horizontal, chaque bras étant équipé d'un étau de prise en deux points distincts d'au moins un câble à fibres optiques, tendu entre les deux étaux lorsque les deux bras sont dans le prolongement l'un de l'autre, afin de permettre le dénudage du câble entre ces deux points par élimination de son enveloppe de protection sans foisonnement aléatoire des fibres contenues dans celle-ci, une pluralité d'anneaux porteurs, répartis selon la longueur des bras entre les deux étaux dans lesquels sont introduits les fibres, et un berceau de montage, disposé dans le plan de travail horizontal dans lequel peut être placée un boîtier d'épissures, chaque fibre, une fois les deux bras rabattus de façon à être parallèles l'un à l'autre, étant individuellement retirée des anneaux porteurs pour être lovée dans le boîtier, indépendamment des autres fibres.

Selon une autre caractéristique du dispositif considéré, les anneaux porteurs sont constitués au moyen de deux crochets, tournés en sens inverse et entre lesquels les fibres peuvent être introduites et retenues, avant d'en être extraites individuellement à la demande.

Selon une autre caractéristique également, le support d'appui comporte, sous le plan de travail horizontal, des guides d'emboîtement pour les extrémités des montants d'un garde-fou, prévu notamment pour maintenir le support au-dessus d'une fosse de réception du câble, réservée également au rangement des boîtiers d'épissures.

Avantageusement, les montants du garde-fou présentent une structure pliable, pour le repliement du dispositif après utilisation.

D'autres caractéristiques d'un dispositif d'aide au rangement des fibres optiques d'un câble dans une boite à épissures, établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique, en perspective et en coupe partielle, d'une fosse souterraine de réception de câbles à fibres optiques, sur laquelle peut être placé le dispositif selon l'invention pour permettre une intervention sur un de ces câbles et sur les fibres qu'il contient.
- La Figure 2 est une vue de détail, à plus grande échelle, d'une fraction d'un câble à fibres optiques.
- La Figure 3 illustre une boite à épissures pour le raccordement d'une ou plusieurs des fibres de deux câbles du type représenté sur la Figure 2.
- Les Figures 4 et 5 sont des vues, respectivement en élévation et en vue de dessus, du dispositif d'aide au rangement selon l'invention, avec un agrandissement d'un des anneaux porteurs de celui-ci.
- Les Figures 6, 7 et 8 illustrent le dispositif représenté sur la Figure 5 après repliement des bras, en permettant d'expliciter le processus d'utilisation de l'appareil.

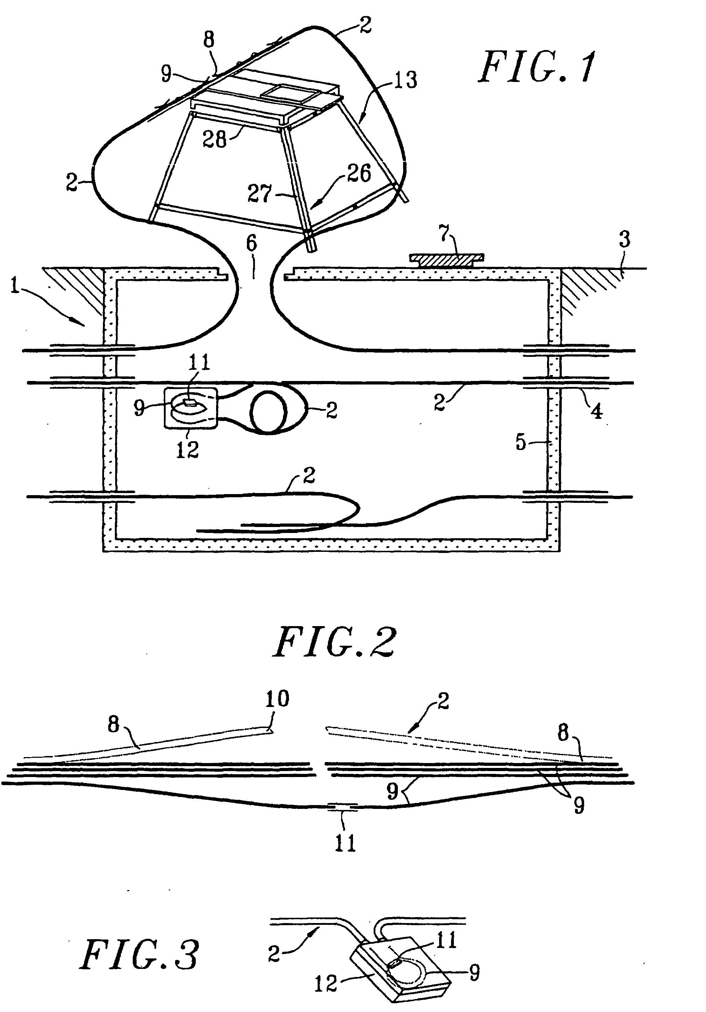

Sur la Figure 1, la référence 1 désigne une fosse de réception pour des câbles à fibres optiques tels que 2, enterrés sous le sol 3 et usuellement disposés dans des conduites 4. Cette fosse comporte généralement une paroi en béton 5 avec, dans sa partie supérieure qui affleure au niveau du sol, une ouverture d'accès 6 normalement obturée par une plaque de fermeture 7.

Les câbles 2 traversent ou sont stockés dans la fosse 1, selon les nécessités du réseau dans lequel ils sont utilisés. Ces câbles, comme représentés sur la Figure 2, comportent, de façon en elle-même parfaitement classique dans la technique, une enveloppe de protection externe 8, à l'intérieur de laquelle sont réparties des fibres optiques 9, formées chacune d'un coeur en silice et d'une gaine extérieure, comportant de préférence un repère de couleur pour les distinguer les unes des autres.

Pour accéder aux fibres 9 du câble 2 à l'intérieur de la gaine 8 de celui-ci, cette dernière peut être sectionnée en 10, les fibres pouvant ensuite être extraites de la gaine, en bout du câble ou en partie courante de celui-ci. Le cas échéant, une ou plusieurs de ces fibres peuvent être raccordées à des fibres homologues d'un autre câble, dénudé comme le premier, au moyen d'épissures de raccordement 11, schématiquement représentées sur la Figure 2 et dont le détail de la réalisation n'importe pas directement à l'invention.

Ces épissures 11 sont ensuite être généralement disposées à l'intérieur d'un boîtier de protection tel que 12, dont la Figure 3 illustre très schématiquement la structure, les boîtiers ainsi utilisés étant logés et répartis dans la fosse 1, comme montré sur la Figure 1.

Lors de la construction d'un réseau de distribution à câbles à fibres optiques du genre brièvement décrit ci-dessus, il est donc nécessaire pour intervenir sur un quelconque de ces câbles et en particulier sur les fibres qu'il contient, en vue d'assurer un raccordement de ces dernières à l'aide d'épissures appropriées et également pour mettre en place ces épissures dans des boîtiers de protection du type précité, de disposer, non seulement d'une surlongueur adéquate du ou des câbles considérés, mais également de pouvoir intervenir sur ces câbles dans des conditions satisfaisantes, en particulier pour sectionner leur enveloppe externe de protection, accéder aux fibres individuellement, dénuder une ou plusieurs de celles-ci à raccorder à une autre fibre, mettre en place l'épissure de liaison, puis disposer celle-ci dans un boîtier de protection, avant que l'ensemble ne soit replacé dans la fosse enterrée.

A cet effet, les câbles concernés peuvent être aisément sortis de la fosse par l'ouverture 6 de celle-ci après retrait de la plaque d'obturation 7, de manière à permettre à un intervenant qualifié de procéder à l'air libre aux opérations nécessaires.

Toutefois, si le dénudage du câble par enlèvement de son enveloppe de protection externe ne pose pas problème grâce à la mise en oeuvre d'outils de coupe adaptés, on comprend que, de par leur nature même, les fibres optiques vont avoir immédiatement tendance à foisonner et à s'emmêler entre elles en rendant les opérations à effectuer très délicates, indépendamment des risques de torsion excessive et de rupture de ces fibres au cours des manipulations auxquelles elles donnent lieu.

Le dispositif selon l'invention, schématiquement illustré sur la Figure 1 sous la référence 13, permet d'éviter ces inconvénients et au contraire d'intervenir facilement sur les fibres du câble dans des conditions de sécurité maximales.

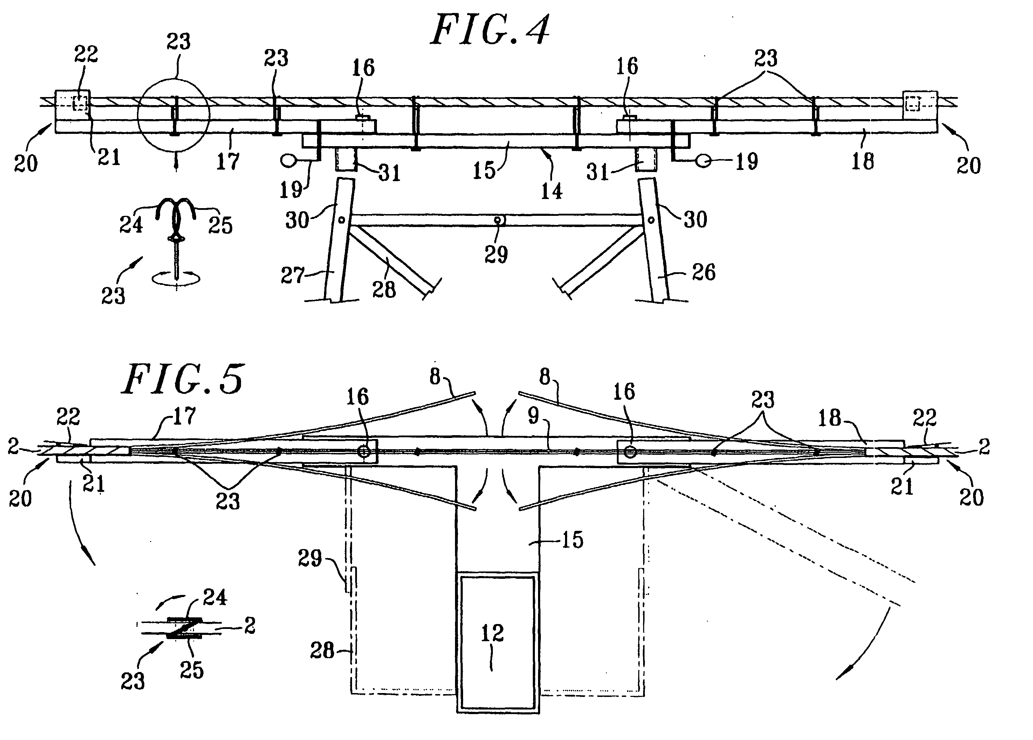

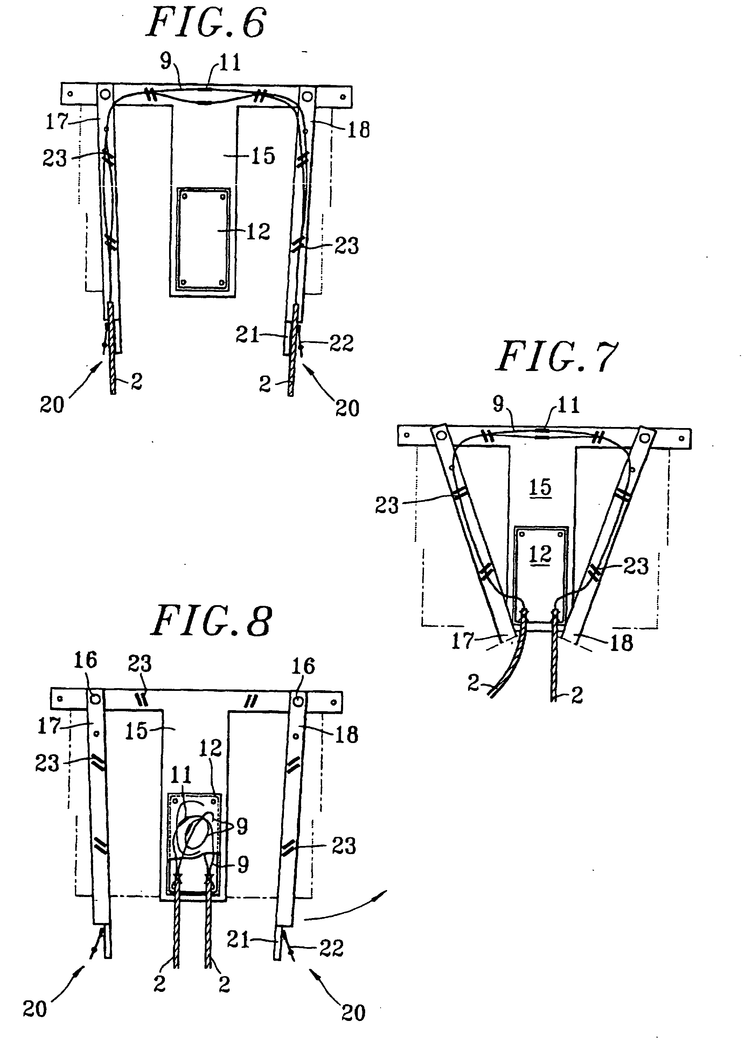

Comme on le voit plus particulièrement sur les Figures 4 et 5, le dispositif 13 considéré comporte un support d'appui 14, essentiellement constitué par une table horizontale 15, sur laquelle sont articulés autour de deux axes opposés 16, deux bras respectivement 17 et 18, disposés de telle sorte qu'ils puissent pivoter pour se placer, soit dans le prolongement l'un de l'autre comme représenté sur ces Figures, soit sensiblement parallèles en étant rabattus l'un vers l'autre, comme on le voit plus particulièrement sur les Figures 6 à 8.

Les bras 17 et 18 ainsi articulés sur le support 14, peuvent être bloqués dans la position où ils s'étendent en continuité l'un de l'autre au moyen d'un verrou 19, lequel peut être aisément relâché pour permettre ce pivotement. Les deux bras peuvent être également immobilisés dans leur position rabattue, voire dans toute autre au cours de leur déplacement.

Dans l'exemple représenté, la table horizontale 15 présente un profil en T, les bras 17 et 18 étant articulés aux extrémités des branches de celui-ci, tandis que la partie centrale de la table constitue un berceau porteur dont le rôle sera précisé plus loin. Bien entendu, tout autre profil pourrait être utilisé sans sortir du cadre de l'invention.

Chacun des bras 17 et 18 comporte à son extrémité opposée à l'axe d'articulation 16 sur la table 15, un étau de serrage 20, qui dans l'exemple considéré est notamment constitué par une platine 21 contre laquelle s'applique une pince 22, soumise à l'action d'un ressort (non représenté), ce système d'étau à pince ou tout autre fonctionnellement équivalent, permettant de maintenir en deux points distincts et opposés aux extrémités des deux bras le câble 2 sur lequel, on souhaite, après sectionnement et enlèvement de son enveloppe de protection 8, accéder aux fibres optiques 9 qu'il contient pour réaliser les opérations précédemment rappelées.

Avantageusement, le câble 2 est disposé, entre les étaux 20 prévus à ses extrémités, dans une pluralité d'anneaux porteurs 23 dont la structure est représentée à plus grande échelle également sur les Figures 4 et 5, ces anneaux étant notamment formés de deux crochets inversés 24, 25 formant deux boucles délimitant entre elles une fente où le câble 2 peut être introduit avant de se disposier sous les parties recourbées des deux crochets qui le maintiennent ainsi en place.

Le câble, tendu entre les étaux 20 et guidé par les anneaux 23, peut alors subir les opérations prévues de sectionnement de son enveloppe de protection et de dénudage des fibres 9.

Dans les phases suivantes qui sont illustrées sur les Figures 6 à 8, les deux bras sont rabattus l'un vers l'autre, en permettant successivement, de monter en extrémité de deux fibres 9 une épissure de raccordement 11 (Figure 6), de libérer les extrémités des câbles des étaux 20 pour les fixer au boîtier 12, préalablement mis en place dans le berceau de la table 15 (Figure 7), enfin, après avoir retiré les fibres 9 des anneaux porteurs 23, de lover ces fibres et leurs épissures 15 à l'intérieur du boîtier 12 (Figure 8).

Dans une étape finale, ce boîtier ainsi équipé peut être replacé dans la fosse 1 (Figure 1), et y resté stocké jusqu'à une éventuelle nouvelle intervention.

De façon avantageuse, le support d'appui 14 est agencé pour être monté sur une structure pliable 26, permettant de disposer la table horizontale 15 et les bras 17 et 18 au droit de l'ouverture 6 de la fosse, en limitant ainsi les surlongueurs de câbles 2 à extraire de cette dernière.

Dans ce but, cette structure comporte l'allure d'un garde-fou, avec quatre montants verticaux 27 et des entretoises 28 articulées autour d'axes 29, ces montants étant agencés de telle sorte que leurs extrémités 30 puissent s'emboîter dans des guides de réception 31 avantageusement prévus sous le support 14.

On réalise ainsi un dispositif d'aide pour l'intervention et le rangement de fibres optiques, de conception très simple, présentant un encombrement réduit et d'un coût peu élevé, facilitant dans une très large mesure le travail des opérateurs ayant à réaliser sur les câbles et les fibres contenues dans ceux-ci des opérations de raccordement ou de maintenance, sans risques pour les fibres elles-mêmes au cours des manipulations indispensables.

Bien entendu, il va de soi que l'invention ne se limite pas à l'exemple de réalisation plus spécialement décrit ci-dessus en référence aux dessins annexés ; elle en embrasse au contraire toutes les variantes définies par les revendications.

## Revendications

1. Dispositif d'aide pour l'intervention sur et le rangement des fibres optiques (9) d'au moins un câble (2) comportant une enveloppe de protection (8) contenant une pluralité de telles fibres voisines, notamment pour le dénudage de ce câble et la réalisation d'épissures de raccordement (11) sur ces fibres, **caractérisé en ce qu'**il comporte un support d'appui (14) comprenant une table (15) munie de deux bras pivotants opposés (17, 18), articulés sur cette table de manière à pouvoir se disposer, soit dans le prolongement l'un de l'autre, soit sensiblement parallèles l'un à l'autre au-dessus d'un plan de travail, de préférence horizontal, chaque bras étant équipé d'un étau (20) de prise en deux points distincts du câble à fibres optiques, tendu entre les deux étaux lorsque les deux bras sont dans le prolongement l'un de l'autre, afin de permettre le dénudage de ce câble entre ces deux points par élimination de son enveloppe de protection sans foisonnement aléatoire des fibres contenues dans celle-ci, une pluralité d'anneaux porteurs (23), répartis selon la longueur des bras entre les deux étaux dans lesquels sont introduits les fibres (9), et un berceau de montage, disposé dans le plan de travail horizontal sur lequel peut être placée un boîtier (12) d'épissures, le dispositif étant arrangé de sorte que chaque fibre, une fois les deux bras rabattus de façon à être parallèles l'un à l'autre, soit individuellement retirée des anneaux porteurs pour être lovée dans le boîtier, indépendamment des autres fibres.

2. Dispositif selon la revendication 1, **caractérisé en ce que** les anneaux porteurs (23) sont constitués au moyen de deux crochets (24, 25), tournés en sens inverse et entre lesquels les fibres (9) peuvent être introduites et retenues, avant d'en être extraites individuellement à la demande.

3. Dispositif selon l'une des revendications 1 ou 2, **caractérisé en ce que** le support d'appui (14) comporte, sous le plan de travail horizontal, des guides d'emboîtement (31) pour les extrémités (30) des montants (27) d'un garde-fou (26), prévu notamment pour maintenir le support au-dessus d'une fosse de réception (1) du câble (2), réservée également au rangement des boîtiers (12) d'épissures.

4. Dispositif selon la revendication 3, **caractérisé en ce que** les montants (27) du garde-fou (26) présentent une structure pliable (28, 29).

5. Dispositif selon l'une quelconque des revendications 1 à 4, **caractérisé en ce que** les étaux (20) de prise du câble comportent chacun une platine (21) sur laquelle le câble est maintenu à l'aide d'une pince à ressort (22).

## Patentansprüche

1. Hilfsvorrichtung zum sicheren Bearbeiten und Sortieren von optischen Fasern (9) mindestens eines Kabels (2), das einen Schutzmantel (8) aufweist und eine Mehrzahl solcher benachbarter Fasern enthält, besonders zum Abmanteln dieses Kabels und Herstellen von Spleißverbindungen (11) an diesen Fasern, **dadurch gekennzeichnet, daß** sie einen Auflageträger (14) mit einem Tisch (15) mit zwei gegenüberliegenden schwenkbaren Armen (17, 18) aufweist, die an diesem Tisch so angelenkt sind, daß sie Stellungen entweder der eine in der Verlängerung des anderen oder zueinander im wesentlichen parallel oberhalb einer vorzugsweise horizontalen Arbeitsebene einnehmen können, wobei jeder Arm mit einer Zwinge (20) zum Ergreifen des Kabels mit optischen Fasern an zwei verschiedenen Punkten ausgerüstet ist, wobei das Kabel zwischen den zwei Zwingen gespannt ist, während die zwei Arme sich der eine in der Verlängerung des anderen befinden, um das Abmanteln dieses Kabels zwischen diesen Punkten durch Abnahme seines Schutzmantels ohne zufälliges Heraustreten der in diesem enthaltenen Fasern ermöglicht, wobei über die Länge der Arme zwischen den zwei Zwingen eine Mehrzahl von Tragringen (23) verteilt ist, in welche die Fasern (9) eingeführt werden, und ein Montagesattel in der horizontalen Arbeitsebene angeordnet ist, auf dem ein Gehäuse (12) der Spleißungen angeordnet werden kann, wobei die Vorrichtung so ausgebildet ist, daß jede Faser, nachdem die zwei Arme so zurückgeklappt sind, daß sie parallel zueinander sind, individuell aus den Tragringen herausgezogen werden kann, um in das Gehäuse unabhängig von den anderen Fasern aufgeschossen zu werden.

2. Vorrichtung nach Anspruch 1, **dadurch gekennzeichnet, daß** die Tragringe (23) mittels zweier Haken (24, 25) gebildet sind, die einander in umgekehrter Richtung zugewandt sind und zwischen denen die Fasern (9) eingeführt und zurückgehalten werden können, bevor sie nach Bedarf einzeln herausgezogen werden.

3. Vorrichtung nach einem der Ansprüche 1 oder 2, **dadurch gekennzeichnet, daß** der Auflageträger (14) unter der horizontalen Arbeitsebene Aufnahmeführungen (31 ) für die Enden (30) der Ständer (27) eines Geländers (26) aufweist, das besonders dafür vorgesehen ist, den Träger oberhalb eines Schachts (1) zur Aufnahme des Kabels (2) zu halten, der auch für die Lagerung von Spleißgehäusen (12) vorgesehen ist.

4. Vorrichtung nach Anspruch 3, **dadurch gekennzeichnet, daß** die Ständer (27) des Geländers (26) eine faltbare Struktur (28, 29) haben.

5. Vorrichtung nach einem der Ansprüche 1 bis 4, **dadurch gekennzeichnet, daß** die Zwingen (20) zum Ergreifen des Kabels jede eine Platine (21) aufweisen, an der das Kabel mittels einer Federzange (22) gehalten ist.

## Claims

1. Device for aiding work on and storage of the fibre optics (9) of at least one cable (2) comprising a protective jacket (8) containing a plurality of such neighbouring fibres, in particular for stripping this cable and the realization of termination splices (11) on these fibres, **characterized in that** it has a bearing support (14) comprising a table (15) equipped with two opposed pivoting arms (17, 18), articulated on this table in such a manner that each is able to be positioned either in the extension of the other, or approximately parallel to the other above a working plane, preferably horizontal, each arm being equipped with a grip vice (20) at two distinct points of the fibre optic cable, stretched between the two vices when the two arms are each in the extension of the other, in order to allow the stripping of this cable between these two points by elimination of its protective jacket without random swelling of the fibres contained in the latter, a plurality of bearing rings (23) distributed according to the length of the arms between the two vices into which the fibres are introduced (9), and a mounting cradle arranged in the horizontal working plane on which a splice case (12) can be placed, the device being arranged so that each fibre, once the two arms are folded back so that they are parallel to each other, is individually pulled back from the bearing rings to be coiled in the case, independently of the other fibres.

2. Device according to claim 1, **characterized in that** the bearing rings (23) are constituted by at least two hooks (24, 25), turned backwards and between which the fibres (9) can be introduced and retained before being individually extracted on demand.

3. Device according to one of claims 1 or 2, **characterized in that** the bearing support (14) has, beneath the horizontal working plane , fitting guides (31) for the ends (30) of the posts (27) of a guardrail (26), provided in particular for maintaining the support above a reception pit (1) for the cable (2), also reserved for storing the splice cases (12).

4. Device according to claim 3, **characterized in that** the posts (27) of the guardrail (26) have a flexible structure (28, 29).

5. Device according to any one of claims 1 to 4, **characterized in that** the grip vices (20) of the cable each comprise a bearing plate (21) on which the cable is maintained using a spring clip (22).
